(19) Europäisches Patentamt
European Patent Office
Office européen des brevets

(11) EP 4 763 895 A1

(12) **EUROPEAN PATENT APPLICATION**

(43) Date of publication:
**24.06.2026 Bulletin 2026/26**

(21) Application number: **25175632.6**

(22) Date of filing: **12.05.2025**

(51) International Patent Classification (IPC):
***C08J 9/00*** *(2006.01)* ***C08L 1/08*** *(2006.01)*
***C08L 67/04*** *(2006.01)*

(52) Cooperative Patent Classification (CPC):
(C-Sets available)
**C08L 1/02; C08J 9/0014; C08J 9/0066;**
**C08J 9/0085;** C08J 2301/02; C08J 2367/04
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024 JP 2024224456**

(71) Applicant: **FUJIFILM Business Innovation Corp.**
**Minato-ku**
**Tokyo (JP)**

(72) Inventors:
- **SANO, Tatsuki**
  **Minamiashigara-shi, Kanagawa (JP)**
- **OGURA, Hiroki**
  **Minamiashigara-shi, Kanagawa (JP)**

(74) Representative: **Becker Kurig & Partner**
**Patentanwälte mbB**
**Bavariastraße 7**
**80336 München (DE)**

(54) **PARTICLE AND RESIN COMPOSITION**

(57) A particle includes a porous structure including at least one of a cellulose or a cellulose derivative as a main component, and a degradation promoter carried in the porous structure, in which a volume-average particle diameter of particles is 0.05 μm or more and 1,000 μm or less, a BET specific surface area of the particle is 1 $m^2$/g or more and 150 $m^2$/g or less, a degree of hydrophobicity of the particle is 0.1% or more and 30% or less, and a content of the degradation promoter with respect to 100 parts by mass of the porous structure is 1 part by mass or more and 50 parts by mass or less.

EP 4 763 895 A1

(52) Cooperative Patent Classification (CPC): (Cont.)

C-Sets
**C08L 1/02, C08K 5/50;**
**C08L 67/04, C08L 1/08, C08K 3/22, C08K 5/5445;**
**C08L 67/04, C08L 1/08, C08K 3/26, C08K 5/5445;**
**C08L 67/04, C08L 1/08, C08K 3/32, C08K 5/5445;**
**C08L 67/04, C08L 1/08, C08K 5/5317,**
**C08K 5/5445**

## Description

BACKGROUND OF THE INVENTION

(i) Field of the Invention

The present invention relates to a particle and a resin composition.

(ii) Description of Related Art

JP2009-057408A proposes an easily degradable film consisting of a resin composition including a biodegradable resin composition and alkali-releasable particles.

JP2022-171207A proposes a composite resin molded body containing a main resin and a plurality of natural fibers dispersed in the main resin at a specific content, in which the natural fibers contain a microorganism or an enzyme, a part of the natural fibers is exposed on a surface of the composite resin molded body, and at least a part of the surface of the natural fibers is coated with a hydrolyzable coating resin.

WO2023/100258A proposes a marine biodegradable resin composition including "a biodegradation promoter that is a hydrophobic powder consisting of a compound in which two or more monovalent organic anions having different structures, selected from monovalent organic anions derived from a monovalent carboxylic acid, a monovalent sulfonic acid, a monovalent sulfuric acid ester, and a monovalent phosphoric acid ester, are bonded to a divalent or higher valent metal cation by an ionic bond, and is dissolved in a 3% by mass aqueous sodium chloride solution or exhibits hydrophilicity in a 3% by mass aqueous sodium chloride solution, in which at least one of the two or more organic anions has a monovalent hydrocarbon group having 6 to 30 carbon atoms".

SUMMARY OF THE INVENTION

An object of the present invention is to provide a particle including a porous structure including at least one of a cellulose or a cellulose derivative as a main component, in which the particle makes it possible to obtain a resin molded body that is unlikely to deteriorate in a normal use environment and has good biodegradability in a degradation promoting environment, as compared with a case where a degradation promoter is not included, a case where a volume-average particle diameter of the particles is less than 0.05 μm or more than 1,000 μm, a case where a BET specific surface area of the particle is less than 1 $m^2/g$ or more than 150 $m^2/g$, a case where the degree of hydrophobicity is less than 0.1% or more than 30%, or a case where a content of the degradation promoter is less than 1 part by mass or more than 50 parts by mass.

Means for addressing the problems include the following aspects.

<1> According to a first aspect of the present disclosure, there is provided a particle including:

a porous structure including at least one of a cellulose or a cellulose derivative as a main component; and
a degradation promoter carried in the porous structure,
in which a volume-average particle diameter of the particles is 0.05 μm or more and 1,000 μm or less,
a BET specific surface area of the particle is 1 $m^2/g$ or more and 150 $m^2/g$ or less,
a degree of hydrophobicity of the particle is 0.1% or more and 30% or less, and
a content of the degradation promoter with respect to 100 parts by mass of the porous structure is 1 part by mass or more and 50 parts by mass or less.

<2> According to a second aspect of the present disclosure, there is provided the particle according to <1>, in which the degradation promoter may include at least one selected from the group consisting of an acid, a base, and an enzyme.

<3> According to a third aspect of the present disclosure, there is provided the particle according to <1> or <2>, in which the particle may have at least an alkylsilyl group on a surface of the particle.

<4> According to a fourth aspect of the present disclosure, there is provided a resin composition including:

a biodegradable resin; and
the particle according to any one of <1> to <3>,
in which a content of the degradation promoter with respect to 100 parts by mass of the biodegradable resin may be 0.01 parts by mass or more and 10 parts by mass or less.

<5> According to a fifth aspect of the present disclosure, there is provided the resin composition according to <4>,

in which the biodegradable resin may be at least one selected from the group consisting of polylactic acid, a polybutylene adipate/terephthalate copolymer resin, polyalkylene succinate, polyalkylene succinate adipate, and polyhydroxyalkanoate.

<6> According to a sixth aspect of the present disclosure, there is provided the resin composition according to <4> or <5>,

in which a biodegradation ratio measured by a method in accordance with ISO 14855-1: 2012 may be 30% or more in 28 days.

<7> According to a seventh aspect of the present disclosure, there is provided the resin composition according to any one of <4> to <6>,

in which a heat deflection temperature (HDT) may be 125°C or higher.

According to <1>, there is provided a particle including a porous structure including at least one of a cellulose or a cellulose derivative as a main component, in which the particle makes it possible to obtain a resin molded body that is unlikely to deteriorate in a normal use environment and has good biodegradability in a degradation promoting environment, as compared with a case where a degradation promoter is not included, a case where a volume-average particle diameter of the particles is less than 0.05 μm or more than 1,000 μm, a case where a BET specific surface area of the particle is less than 1 $m^2/g$ or more than 150 $m^2/g$, a case where a degree of hydrophobicity of the particle is less than 0.1% or more than 30%, or a case where a content of the degradation promoter with respect to 100 parts by mass of the porous structure is less than 1 part by mass or more than 50 parts by mass.

According to <2>, there is provided the particle, which makes it possible to obtain a resin molded body having good biodegradability in a degradation promoting environment, as compared with a case where the degradation promoter is a titanium oxide particle.

According to <3>, there is provided the particle, which makes it possible to obtain a resin molded body that is unlikely to deteriorate in a normal use environment, as compared to a case where the particle does not have an alkylsilyl group on the surface.

According to <4> or <5>, there is provided a resin composition including a biodegradable resin, and a particle including a porous structure including at least one of a cellulose or a cellulose derivative as a main component, in which the resin composition makes it possible to obtain a resin molded body that is unlikely to deteriorate in a normal use environment and has good biodegradability in a degradation promoting environment, as compared with a case where a particle not including a degradation promoter is applied, a case where a particle having a volume-average particle diameter of the particles of less than 0.05 μm or more than 1,000 μm is applied, a case where a particle having a BET specific surface area of the particle of less than 1 $m^2/g$ or more than 150 $m^2/g$ is applied, a case where a particle having a degree of hydrophobicity of less than 0.1% or more than 30% is applied, a case where a particle having a content of the degradation promoter with respect to 100 parts by mass of the porous structure of less than 1 part by mass or more than 50 parts by mass is applied, or a case where a content of the degradation promoter with respect to 100 parts by mass of the biodegradable resin is less than 0.01 parts by mass or more than 10 parts by mass.

According to <6>, there is provided the resin composition, which makes it possible to obtain a resin molded body having good biodegradability in a degradation promoting environment, as compared with a case where the biodegradation ratio is less than 30% in 28 days.

According to <7>, there is provided the resin composition, which makes it possible to obtain a resin molded body having excellent heat resistance, as compared to a case where the heat deflection temperature (HDT) is lower than 125°C.

## DETAILED DESCRIPTION OF THE INVENTION

Hereinafter, exemplary embodiments that are examples of the present invention will be described. The following description and Examples merely show the exemplary embodiments and do not limit the scope of the invention.

In a numerical range described in a stepwise manner in the present specification, an upper limit value or a lower limit value described in a certain numerical range may be substituted with an upper limit value or a lower limit value in another numerical range described in a stepwise manner. In addition, in a numerical range described in the present specification, an upper limit value or a lower limit value described in the numerical range may be replaced with a value shown in Examples.

Each component may include a plurality of corresponding substances.

In a case where the amount of each component in a composition is mentioned and plural kinds of substances corresponding to each component are present in the composition, the amount means a total amount of the plural kinds of substances present in the composition unless otherwise specified.

[Particle]

The particle according to the present exemplary embodiment includes a porous structure including at least one of a cellulose or a cellulose derivative as a main component, and a degradation promoter carried in the porous structure. The volume-average particle diameter of the particles according to the present exemplary embodiment is 0.05 μm or more and 1,000 μm or less. The BET specific surface area of the particle according to the present exemplary embodiment is 1 $m^2/g$ or more and 150 $m^2/g$ or less. The degree of hydrophobicity of the particle according to the present exemplary embodiment is 0.1% or more and 30% or less. The content of the degradation promoter in the particle according to the present exemplary embodiment with respect to 100 parts by mass of the porous structure is 1 part by mass or more and 50 parts by mass or less.

Hereinafter, the particle according to the present exemplary embodiment is also referred to as "the present particle". At least one of a cellulose or a cellulose derivative is also referred to as "a cellulose and the like". The content of the degradation promoter with respect to 100 parts by mass of the porous structure is also referred to as "an amount of the promoter carried".

Due to the configuration, the present particle makes it possible to obtain a resin molded body that is unlikely to deteriorate in a normal use environment and has good biodegradability in a degradation promoting environment.

Here, the "normal use environment" refers to, for example, an environment in the atmosphere at a temperature of 25°C and a humidity of 50%. In addition, the "degradation promoting environment" refers to, for example, an environment in compost having a temperature of 55°C and a moisture content of 45% to 60% by mass. Furthermore, the moisture content of the compost refers to a proportion of moisture with respect to the entire compost on a mass basis.

In recent years, there has been an increasing interest in biodegradable resins from environmental awareness typified by sustainable development goals (SDGs). In particular, among the biodegradable resins, a polylactic acid is a resin having high carbon-neutral biodegradability. Therefore, the polylactic acid is expected to be a substitute for a petroleum-derived plastic.

On the other hand, a method using a degradation promoter is considered as a method for enhancing the biodegradability of a biodegradable resin in a degradation promoting environment. However, the biodegradable resins, in particular, the polylactic acid, may be more likely to deteriorate in a normal use environment due to contact with a degradation promoter.

In the present exemplary embodiment, the particle in which a degradation promoter is carried in a porous structure including a cellulose and the like as a main component, and the volume-average particle diameter, the BET specific surface area, the degree of hydrophobicity, and the amount of the promoter carried are in the above-described ranges is used. Specifically, the present particle is present in the biodegradable resin. This makes it possible to obtain a resin molded body achieving both the suppression of the deterioration in a normal use environment and the improvement of biodegradability in a degradation promoting environment. A reason thereof is presumed as follows.

The porous structure including a cellulose and the like as a main component has high biodegradability in a degradation promoting environment. In the resin molded body including the porous structure in the biodegradable resin, the biodegradation of the porous structure occurs in advance in the degradation promoting environment.

Along with the biodegradation of the porous structure, the surface area of the biodegradable resin increases, and the biodegradable resin is more likely to come into contact with decomposing enzymes and microorganisms in the compost. The degradation promoter carried in the porous structure in the amount of the promoter carried is released, and the biodegradable resin and the degradation promoter are also more likely to come into contact with each other.

In addition, in a case where the volume-average particle diameter of the particles is equal to or less than the upper limit value, the particles are more likely to be dispersed in a state close to uniform in the biodegradable resin. Also, the contact point between the decomposing enzyme, the microorganism, and the degradation promoter, and the biodegradable resin is more likely to be in a state close to uniform. Furthermore, in a case where the degree of hydrophobicity of the particles is equal to or less than the upper limit value, the degradation promoter is likely to be released in a degradation promoting environment.

Therefore, it is considered that the biodegradation rate of the biodegradable resin is increased, and the biodegradability in a degradation promoting environment in the resin molded body is improved.

In addition, the porous structure including a cellulose and the like as a main component functions as a crystal nucleating agent in the biodegradable resin. Therefore, in a normal use environment, the porous structure accelerates the crystallization of the biodegradable resin and the biodegradable resin is less likely to deteriorate.

In addition, since the degradation promoter is carried in the porous structure, the degradation promoter is unlikely to come into contact with the biodegradable resin in a normal use environment.

In particular, the present particles have a volume-average particle diameter equal to or more than the lower limit value and a BET specific surface area equal to or more than the lower limit value. Therefore, the degradation promoter is likely to be carried inside the porous structure and is unlikely to come into contact with the biodegradable resin in a normal use environment.

In addition, the present particle has a BET specific surface area equal to or less than the upper limit value. Therefore, in the step of dispersing the present particles in the biodegradable resin, micro-disintegration of the porous structure is unlikely to occur. Furthermore, the degradation promoter is also unlikely to be released into the biodegradable resin due to the disintegration of the porous structure. Since the porous structure is structurally continuous to the inside, the encapsulation of the degradation promoter and the hydrophobic treatment are applied to the inside. Even in a case where micro-disintegration occurs in the kneading step during the production of the resin composition, the hydrophobic treatment of the exposed surface and the encapsulation of the degradation promoter are not impaired, and the particles can be dispersed in the biodegradable resin while maintaining the desired particle characteristics even after the kneading step during the production of the resin composition. In addition, it is considered that the degree of hydrophobicity of the particle is equal to or more than the lower limit value, so that moisture is unlikely to penetrate the interior of the porous structure. This makes it difficult for the degradation promoter carried in the porous structure to leach out together with moisture. That is, in a normal use environment, the degradation promoter and the biodegradable resin are unlikely to come into contact with each other.

Therefore, it is considered that the deterioration in a normal use environment is suppressed even in a case where the amount of the promoter carried is within the range.

Due to the above-described reasons, it is presumed that a resin molded body which is unlikely to deteriorate in a normal use environment and has good biodegradability in a degradation promoting environment can be obtained by using the present particle.

Hereinafter, the details of the present particle will be described.

<Volume-Average Particle Diameter of Particles>

The volume-average particle diameter of the present particles is 0.05 μm or more and 1,000 μm or less, and is, for example, preferably 0.05 μm or more and 800 μm or less, more preferably 1 μm or more and 500 μm or less, and still more preferably 20 μm or more and 200 μm or less.

In a case where the volume-average particle diameter of the present particles is equal to or more than the lower limit value, the degradation promoter is likely to be carried inside the porous structure. Therefore, it is presumed that a resin molded body which is unlikely to deteriorate in a normal use environment can be obtained. In addition, in a case where the volume-average particle diameter of the present particles is equal to or more than the lower limit value, a resin molded body having excellent heat resistance can be obtained.

In a case where the volume-average particle diameter of the present particles is equal to or less than the upper limit value, the present particles are likely to be dispersed in a state close to uniform in the biodegradable resin. Therefore, it is presumed that a resin molded body having good biodegradability in a degradation promoting environment can be obtained.

A method for measuring the volume-average particle diameter of the particles is as follows.

50 mg of particles to be measured are put into 10 ml of a 0.2% by mass aqueous solution of an anionic surfactant (manufactured by The Dow Chemical Company, product name: DOWFAX), and dispersed by ultrasonic waves for 5 minutes to obtain a dispersion liquid. The obtained dispersion liquid is measured with a particle size distribution measuring device (model number: LS13320, manufactured by Beckman Coulter, Inc.). The particle size distribution obtained through the measurement is used to plot a cumulative distribution by volume from the smaller diameter side across the divided particle size ranges (channels). The particle diameter at which the cumulative percentage reaches 50% is defined as a volume-average particle diameter.

<BET Specific Surface Area of Particle>

The BET specific surface area of the present particle is 1 $m^2/g$ or more and 150 $m^2/g$ or less, and is, for example, preferably 10 $m^2/g$ or more and 120 $m^2/g$ or less, and more preferably 20 $m^2/g$ or more and 100 $m^2/g$ or less.

In a case where the BET specific surface area of the present particle is equal to or more than the lower limit value, the degradation promoter is likely to be carried inside the porous structure. Therefore, it is presumed that a resin molded body which is unlikely to deteriorate in a normal use environment can be obtained. In addition, in a case where the BET specific surface area of the present particle is equal to or more than the lower limit value, a resin molded body having excellent heat resistance can be obtained.

In a case where the BET specific surface area of the present particle is equal to or less than the upper limit value, micro-disintegration of the porous structure is unlikely to occur in the step of dispersing the present particles in the biodegradable resin. Therefore, it is presumed that a resin molded body which is unlikely to deteriorate in a normal use environment can be obtained. In addition, in a case where the BET specific surface area of the present particle is equal to or less than the upper limit value, a resin molded body having excellent heat resistance can be obtained.

A method for measuring the BET specific surface area of the particle is as follows.

The BET specific surface area is a value measured by an automatic measurement through a multiple point method, using a specific surface area/pore distribution measuring device (BELSORP MAX II, MicrotracBEL Corp.) with 0.1 g of particles to be measured as a measurement sample. The measurement temperature is set to 77 K and a nitrogen gas is used as the adsorbing gas. It should be noted that before the measurement, a sample (that is, the porous structure) is subjected to vacuum drying at 100°C for 24 hours as a pretreatment, and water and the like adsorbed in the pores of the sample is removed.

<Degree of Hydrophobicity of Particle>

The degree of hydrophobicity of the present particle is 0.1% or more and 30% or less, and is, for example, preferably 1% or more and 20% or less, and more preferably 5% or more and 15% or less.

It is considered that in a case where the degree of hydrophobicity of the present particle is equal to or more than the lower limit value, moisture is unlikely to penetrate the interior of the porous structure. Therefore, it is presumed that the deterioration of the resin molded body in a normal use environment, which is caused by the degradation promoter carried in the porous structure leaching out together with moisture, is suppressed. In addition, in a case where the degree of hydrophobicity of the present particle is equal to or more than the lower limit value, a resin molded body having excellent heat resistance can be obtained.

It is considered that in a case where the degree of hydrophobicity of the present particle is equal to or less than the upper limit value, the biodegradation of the porous structure is likely to occur in a degradation promoting environment. Therefore, it is presumed that a resin molded body having good biodegradability in a degradation promoting environment can be obtained.

A method for measuring the degree of hydrophobicity of the particle is as follows.

0.1 g of particles to be measured is added to 50 mL of water under stirring. Methanol is gradually added while continuing the stirring, and the amount of methanol added thereto upon the precipitation of the particles is denoted as "MeOH (mL)", and the degree of hydrophobicity is converted according to the following expression.

$$\text{Expression: Degree of Hydrophobicity (\%)} = \text{MeOH} \times 100/(\text{MeOH} + 50)$$

<Amount of Promoter Carried>

The amount of the promoter carried, that is, the content of the degradation promoter with respect to 100 parts by mass of the porous structure is 1 part by mass or more and 50 parts by mass or less, and is, for example, preferably 5 parts by mass or more and 30 parts by mass or less, and more preferably 7 parts by mass or more and 30 parts by mass or less.

In a case where the amount of the promoter carried is equal to or more than the lower limit value, a resin molded body having excellent biodegradability in a degradation promoting environment can be obtained.

In a case where the amount of the promoter carried is equal to or less than the upper limit value, a resin molded body having suppression in the deterioration in a normal use environment can be obtained even in a case where the amount of the promoter carried is equal to or more than the lower limit value. In addition, in a case where the amount of the promoter carried is equal to or less than the upper limit value, a resin molded body having excellent heat resistance can be obtained.

Furthermore, the content of the degradation promoter with respect to the entire particles may be 0.99% by mass or more and 33% by mass or less. From the viewpoint of obtaining a resin molded body achieving both the suppression of deterioration in a normal use environment and the improvement of biodegradability in a degradation promoting environment, the content of the degradation promoter with respect to the entire particles is, for example, preferably 4.8% by mass or more and 23% by mass or less, and more preferably 6.5% by mass or more and 23% by mass or less.

A method for measuring the amount of the promoter carried and the content of the degradation promoter with respect to the entire particles is as follows.

0.5 g of particles to be measured is added to 100 ml of a 0.05% by mass aqueous solution of an anionic surfactant (manufactured by The Dow Chemical Company, product name: DOWFAX), and the mixture is dispersed by ultrasonic waves for 5 minutes to obtain a dispersion liquid. Ion chromatographic analysis of a filtrate obtained by filtering the dispersion liquid is performed to determine the amount of the promoter carried and the content of the degradation promoter with respect to the entire particles. The ion chromatographic analysis is performed using an ion component analysis device (DIONEX INTEGRION-RFIC400, Thermo Fisher Scientific, Inc.).

<Porous Structure>

The porous structure included in the present particle includes a cellulose and the like as a main component. That

is, the porous structure includes at least one of a cellulose or a cellulose derivative as a main component.

The expression, "having a cellulose and the like as a main component", means that the total content of cellulose and the like with respect to the porous structure is 90% by mass or more. The total content of the cellulose and the cellulose derivative with respect to the porous structure is, for example, preferably 95% by mass or more, more preferably 98% by mass or more, and still more preferably 100% by mass.

(Cellulose and the Like)

The cellulose is a polymer compound in which a large number of β-glucose molecules are linearly polymerized by a glycosidic bond.

On the other hand, examples of the cellulose derivative include cellulose acylate, cellulose ether, hydroxyalkyl cellulose, and carboxymethyl cellulose.

Among these, from the viewpoint of high biodegradability, for example, the cellulose acylate is preferable as the cellulose derivative.

The cellulose acylate is a cellulose derivative in which at least some of hydroxy groups in a cellulose are substituted with acyl groups (acylated). The acyl group is a group having a structure of $-CO-R^{AC}$ (in which $R^{AC}$ represents a hydrogen atom or a hydrocarbon group).

The cellulose acylate is, for example, a cellulose derivative represented by General Formula (CA).

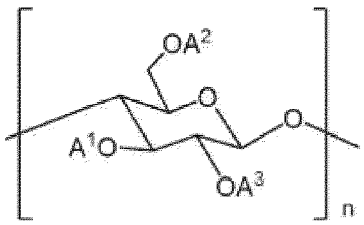

General Formula (CA)

In General Formula (CA), $A^1$, $A^2$, and $A^3$ each independently represent a hydrogen atom or an acyl group, and n represents an integer of 2 or more. It should be noted that at least some of n pieces of $A^1$'s, n pieces of $A^2$'s, or n pieces of $A^3$'s each represent an acyl group. The n pieces of $A^1$'s in the molecule may be all or partially the same as or different from each other. Similarly, n pieces of $A^2$'s and n pieces of $A^3$'s in the molecule may be all or partially the same as or different from each other.

In the acyl group represented by each of $A^1$, $A^2$, and $A^3$, the hydrocarbon group in the acyl group may be linear, branched, or cyclic. In the acyl group represented by each of $A^1$, $A^2$, and $A^3$, the hydrocarbon group in the acyl group is, for example, preferably linear or branched, and more preferably linear.

In the acyl group represented by each of $A^1$, $A^2$, and $A^3$, the hydrocarbon group in the acyl group may be a saturated hydrocarbon group or an unsaturated hydrocarbon group. In the acyl group represented by each of $A^1$, $A^2$, and $A^3$, the hydrocarbon group in the acyl group is, for example, preferably a saturated hydrocarbon group.

The acyl group represented by each of $A^1$, $A^2$, and $A^3$ is, for example, preferably an acyl group having 1 or more and 6 or less carbon atoms. That is, as the cellulose acylate, for example, cellulose acylate having an acyl group having 1 or more and 6 or less carbon atoms is preferable.

The acyl group represented by each of $A^1$, $A^2$, and $A^3$ may be a group in which a hydrogen atom in the acyl group is substituted with a halogen atom (for example, a fluorine atom, a bromine atom, or an iodine atom), an oxygen atom, a nitrogen atom, or the like. The acyl group represented by each of $A^1$, $A^2$, and $A^3$ is, for example, preferably unsubstituted.

Examples of the acyl group represented by each of $A^1$, $A^2$, and $A^3$ include a formyl group, an acetyl group, a propionyl group, a butyryl group (butanoyl group), a propenoyl group, and a hexanoyl group. Among these, as the acyl group, for example, an acyl group having 2 or more and 4 or less carbon atoms is more preferable, and an acyl group having 2 or 3 carbon atoms is still more preferable from the viewpoint of improving the biodegradation rate of the porous structure.

Examples of the cellulose acylate include cellulose acetate (cellulose monoacetate, cellulose diacetate (DAC), or cellulose triacetate), cellulose acetate propionate (CAP), and cellulose acetate butyrate (CAB).

From the viewpoint of high biodegradability, the cellulose acylate is, for example, preferably cellulose acetate.

From the viewpoint of the biodegradability, a degree of substitution of the cellulose acylate is, for example, preferably 1.7 or more and 2.9 or less, more preferably 1.9 or more and 2.6 or less, still more preferably 2.0 or more and 2.5 or less, and particularly preferably 2.1 or more and 2.4 or less.

The degree of substitution of cellulose acylate is an index indicating a degree to which a hydroxy group of cellulose is substituted with an acyl group. That is, the degree of substitution is an index indicating a degree of acylation of cellulose acylate. Specifically, the degree of substitution means an average number of substitutions in which three hydroxy groups in a D-glucopyranose unit of cellulose acylate are substituted with acyl groups. The degree of substitution is

determined from an integral ratio of peaks of cellulose-derived hydrogen and acyl group-derived hydrogen by $^1$H-NMR (JMN-ECA/manufactured by JEOL RESONANCE Inc.).

These cellulose derivatives may be used alone or in combination of two or more kinds thereof.

The number-average molecular weight of the cellulose and the like is, for example, preferably 5,000 or more, more preferably 10,000 or more, and still more preferably 15,000 or more.

In a case where the number-average molecular weight of the cellulose and the like is within the range, the micro-disintegration of the porous structure before kneading with the biodegradable resin is suppressed. As a result, the secondary aggregation after the disintegration is suppressed and the fine uniform dispersion in the resin is easily realized. Therefore, it is more likely to achieve both the suppression of the deterioration of the resin molded body in a normal use environment and the improvement of the biodegradability of the resin molded body in a degradation promoting environment.

It should be noted that from the viewpoint of suppressing the deterioration of biodegradability, the number-average molecular weight of the cellulose and the like is, for example, preferably 50,000 or less, and more preferably 30,000 or less.

The number average molecular weight of the cellulose and the like is measured by a gel permeation chromatography method (differential refractive index meter: Optilab T-rEX, manufactured by Wyatt Technology Corporation, multi-angle light scattering detector: DAWN HELEOS II, manufactured by Wyatt Technology Corporation, TSKgel $\alpha$-M column: one $\alpha$-3000 column, manufactured by Tosoh Corporation) using dimethylacetamide (added with 0.1 M lithium chloride) as a solvent.

(Other Components)

The porous structure according to the present exemplary embodiment may include components other than the cellulose and the like.

(Characteristics of Porous Structure)

- Specific Surface Area -

From the viewpoint of achieving both the suppression of the deterioration of the resin molded body in a normal use environment and the improvement of the biodegradability of the resin molded body in a biodegradation promoting environment, the specific surface area of the porous structure according to the present exemplary embodiment is, for example, preferably 1 $m^2/g$ or more and 150 $m^2/g$ or less, more preferably 10 $m^2/g$ or more and 120 $m^2/g$ or less, and still more preferably 20 $m^2/g$ or more and 100 $m^2/g$ or less.

In a case where the specific surface area of the porous structure is equal to or more than the lower limit value, the degradation promoter is likely to be carried inside the porous structure. Therefore, a resin molded body that is unlikely to deteriorate in a normal use environment can be obtained. In addition, in a case where the specific surface area of the porous structure is equal to or more than the lower limit value, a resin molded body having excellent heat resistance can be obtained.

In a case where the specific surface area of the porous structure is equal to or less than the upper limit value, micro-disintegration of the porous structure is unlikely to occur in the step of dispersing the present particles in the biodegradable resin. Therefore, a resin molded body that is unlikely to deteriorate in a normal use environment can be obtained. In addition, in a case where the specific surface area of the porous structure is equal to or less than the upper limit value, a resin molded body having excellent heat resistance can be obtained.

The specific surface area of the porous structure is a BET specific surface area, and is a value measured by automatic measurement of a multiple point method using a specific surface area/pore distribution measuring device (BELSORP MAX II, Microtrac Retsch GmbH). The measurement temperature is set to 77 K and a nitrogen gas is used as the adsorbing gas.

It should be noted that before the measurement, a sample (that is, the porous structure) is subjected to vacuum drying at 100°C for 24 hours as a pretreatment, and water and the like adsorbed in the pores of the sample is removed.

- Void Ratio -

The void ratio of the porous structure according to the present exemplary embodiment is 10% or more and 50% or less, and is, for example, preferably 15% or more and 50% or less, and more preferably 20% or more and 50% or less.

In a case where the void ratio of the porous structure is equal to or more than the lower limit value, the degradation promoter is likely to be carried inside the porous structure. Therefore, a resin molded body that is unlikely to deteriorate in a normal use environment can be obtained. In addition, in a case where the void ratio of the porous structure is equal to or

more than the lower limit value, a resin molded body having excellent heat resistance can be obtained.

In a case where the void ratio of the porous structure is equal to or less than the upper limit value, micro-disintegration of the porous structure is unlikely to occur in the step of dispersing the present particles in the biodegradable resin. Therefore, a resin molded body that is unlikely to deteriorate in a normal use environment can be obtained. In addition, in a case where the void ratio of the porous structure is equal to or less than the upper limit value, a resin molded body having excellent heat resistance can be obtained.

A method for measuring the void ratio of the porous structure is as follows.

The porous structure to be measured is observed with a scanning electron microscope (SEM) at a magnification of 25,000 times to obtain an SEM image. The SEM image is incorporated into image processing software "ImageJ" and subjected to a binarization processing to determine an area of the entire porous structure and an area of the voids. Then, a proportion of the voids of the porous structure to the area of the entire porous structure is determined.

This operation is performed 10 times to determine an average value. The obtained average value is defined as the void ratio of the porous structure.

- Average Diameter -

The average diameter of the porous structure is, for example, preferably 0.05 μm or more and 1,000 μm or less, more preferably 0.05 μm or more and 800 μm or less, still more preferably 1 μm or more and 500 μm or less, and particularly preferably 20 μm or more and 200 μm or less.

In a case where the average diameter of the porous structure is equal to or more than the lower limit value, the degradation promoter is likely to be carried inside the porous structure. Therefore, a resin molded body that is unlikely to deteriorate in a normal use environment can be obtained. In addition, in a case where the average diameter of the porous structure is equal to or more than the lower limit value, a resin molded body having excellent heat resistance can be obtained.

In a case where the average diameter of the porous structure is equal to or less than the upper limit value, the present particles are likely to be dispersed in a state close to uniform in the biodegradable resin. Therefore, a resin molded body having good biodegradability in a degradation promoting environment can be obtained.

A method for measuring the average diameter of the porous structure is as follows.

50 mg of a porous structure to be measured is put into 10 ml of a 0.2% by mass aqueous solution of an anionic surfactant (manufactured by Dow Chemical Company, product name: DOWFAX), and dispersed by ultrasonic waves for 5 minutes to obtain a dispersion liquid. The obtained dispersion liquid is measured with a particle size distribution measuring device (model number: LS13320, manufactured by Beckman Coulter, Inc.). The particle size distribution obtained through the measurement is used to plot a cumulative distribution by volume from the smaller diameter side across the divided particle size ranges (channels). The particle diameter at which the cumulative percentage reaches 50% is defined as an average diameter of the porous structure.

- Specific Gravity -

A specific gravity of the porous structure according to the present exemplary embodiment is, for example, preferably 0.50 g/cm$^3$ or more and 1.15 g/cm$^3$ or less, more preferably 0.60 g/cm$^3$ or more and 1.00 g/cm$^3$ or less, and still more preferably 0.70 g/cm$^3$ or more and 0.90 g/cm$^3$ or less.

In a case where the specific gravity of the porous structure is within the range, it is likely to realize the dispersion in the biodegradable resin is nearly uniform while the present particles are kneaded with the biodegradable resin. Therefore, a resin molded body having good biodegradability in a degradation promoting environment can be obtained.

A method for measuring the specific gravity of the porous structure is as follows.

Using 30 g of the porous structure as a sample, the specific gravity is measured three times by a water displacement method using an automatic densimeter (DSG-1, manufactured by Toyo Seiki Seisaku-sho, Ltd.), with ethanol as a dispersion medium measurement liquid, and an average of the values is adopted as a measured value.

(Method for Producing Porous Structure)

The porous structure according to the present exemplary embodiment can be obtained, for example, by the following method.

(1) A solution A is obtained by adding a cellulose and the like to a good solvent for a cellulose and the like, and then heating the mixture to dissolve the cellulose and the like in the good solvent.
(2) A poor solvent for a cellulose and the like is added to the solution A to obtain a solution B.
(3) The solution B is rapidly cooled to produce a gel-like substance including the cellulose and the like by phase

separation.

(4) The gel-like substance is washed and then dried, and optionally pulverized and sieved to remove coarse particles and aggregates. As a result, a cellulose structure, which is a porous structure including a cellulose and the like as a main component, is obtained. The pulverization method is not particularly limited, and is performed by, for example, a dry pulverization device such as a jet mill, a vibration mill, a ball mill, and a pin mill. The sieving method is performed by, for example, a known method such as a vibrating sieve and an air classifier.

Here, the gel-like substance may be saponified to control the degree of substitution of the cellulose and the like depending on the degree of saponification.

<Degradation Promoter>

Examples of the degradation promoter included in the present particle include an acid, a base, an enzyme, and a photocatalyst.

Examples of the acid include known acids, and specifically include an organic phosphorus compound, an organic acid, an amino acid, and an inorganic acid.

Examples of the organic phosphorus compound include phosphonic acids and phosphinic acids. Examples of the phosphonic acids include phenylphosphonic acid. Examples of the phosphinic acids include phenylphosphinic acid.

Examples of the organic acid include a carboxy group-containing compound and a sulfonic acid group-containing compound. Examples of the carboxy group-containing compound include malonic acid, maleic acid, salicylic acid, citric acid, succinic acid, acetic acid, and lactic acid. Examples of the sulfonic acid group-containing compound include phenylsulfonic acid and p-toluenesulfonic acid.

Examples of the amino acid include glycine, asparagine, glutamine, arginine, and serine.

Examples of the inorganic acid include hydrochloric acid and phosphoric acid.

Examples of the base include known bases, and specifically include an alkali metal carbonate and a nitrogen-containing compound. Examples of the alkali metal carbonate include sodium carbonate and sodium hydrogen carbonate. Examples of the nitrogen-containing compound include ammonia and urea.

Examples of the enzyme include an enzyme that degrades biodegradable plastics. Examples of the enzyme include a hydrolase and an oxidoreductase, and for example, the hydrolase is preferable. Examples of the hydrolase include serine protease, cutinase, lipase, and amylase. Examples of the oxidoreductase include peroxidase, dehydrogenase, and reductase.

Examples of the photocatalyst include titanium dioxide, zinc oxide, and strontium titanate.

These degradation promoters may be used alone or in combination of two or more kinds thereof.

From the viewpoint of obtaining a resin molded body having good biodegradability in a degradation promoting environment, the degradation promoter includes, for example, preferably at least one selected from the group consisting of an acid, a base, and an enzyme, more preferably at least one selected from the group consisting of the acid and the enzyme, and still more preferably the acid.

The degradation promoter may be a water-soluble compound. The water-soluble compound refers to a compound in which the amount of a target substance dissolved in 100 parts by mass of water at 25°C is 1 part by mass or more.

From the viewpoint of obtaining a resin molded body that achieves both the suppression of deterioration in a normal use environment and the improvement of biodegradability in a degradation promoting environment, the degradation promoter preferably includes, among the acids, for example, an acid having an acid dissociation constant of 0.5 or more and 4 or less. The acid dissociation constant of the acid is, for example, preferably 0.5 or more and 4 or less, more preferably 1 or more and 4 or less, and still more preferably 1 or more and 3 or less.

Here, the acid dissociation constant means a first acid dissociation constant (pKa1). The acid dissociation constant is determined from an acid-base titration curve at 20°C. That is, an aqueous acid solution and an aqueous sodium hydroxide solution, in which the addition amounts are known, are created, and the aqueous sodium hydroxide solution is added to the aqueous acid solution. In this case, the amount of sodium hydroxide added and the pH of the aqueous acid solution at that time are measured. Based on the data obtained in this manner, optimization is performed with the theoretical curve to obtain the acid dissociation constant.

<Carriage of Degradation Promoter>

A method for carrying the degradation promoter in the porous structure is not particularly limited. For example, a dispersion liquid including a dispersion medium, a porous structure, and a degradation promoter is prepared, and stirred as necessary, and the dispersion medium is removed as necessary. As a result, a particle in which the degradation promoter is carried in the porous structure can be obtained.

Examples of the dispersion medium used for carrying the degradation promoter include water, methanol, ethanol, and isopropanol.

In the preparation of the dispersion liquid, the degradation promoter may be added after the porous structure is dispersed in the dispersion medium. In addition, in the preparation of the dispersion liquid, the porous structure may be added to a solution in which the degradation promoter is dissolved in the dispersion medium.

The amount of the degradation promoter to be added to the dispersion medium is selected according to a targeted amount of the promoter carried.

The temperature during the preparation and the stirring of the dispersion liquid in the carriage of the degradation promoter is, for example, in a range of 10°C or higher and 40°C or lower, and may be 25°C.

The stirring time of the dispersion liquid in the carriage of the degradation promoter is, for example, in a range of 5 minutes or more and 120 minutes or less.

A method for removing the dispersion medium is not particularly limited and examples thereof include filtration.

<Hydrophobic Treatment>

Examples of a method for obtaining particles in which the degree of hydrophobicity is controlled to be 0.1% or more and 30% or less include a method in which a porous structure having a degradation promoter carried therein is subjected to a hydrophobic treatment using a hydrophobic agent. The hydrophobic treatment does not necessarily need to completely cover the surface of the porous structure, and only needs to be controlled to the hydrophobic range.

Examples of the hydrophobic agent include silicon-containing organic compounds such as an alkoxysilane compound, a silazane compound, and an amino-based silane.

Examples of the alkoxysilane compound include tetramethoxysilane, tetraethoxysilane; methyltrimethoxysilane, ethyltrimethoxysilane, propyltrimethoxysilane, butyltrimethoxysilane, hexyltrimethoxysilane, n-octyltrimethoxysilane, decyltrimethoxysilane, dodecyltrimethoxysilane, vinyltriethoxysilane, methyltriethoxysilane, ethyltriethoxysilane, butyltriethoxysilane, hexyltriethoxysilane, decyltriethoxysilane, dodecyltriethoxysilane, phenyltrimethoxysilane, o-methylphenyltrimethoxysilane, p-methylphenyltrimethoxysilane, phenyltriethoxysilane, benzyltriethoxysilane; dimethyldimethoxysilane, dimethyldiethoxysilane, methylvinyldimethoxysilane, methylvinyldiethoxysilane, diphenyldimethoxysilane, diphenyldiethoxysilane; trimethylmethoxysilane, and trimethylethoxysilane.

Examples of the silazane compound include dimethyldisilazane, trimethyldisilazane, tetramethyldisilazane, pentamethyldisilazane, and hexamethyldisilazane.

Examples of the amino-based silane include 3-aminopropyltriethoxysilane, 3-aminopropyltrimethoxysilane, and N-phenyl-3-aminopropyltrimethoxysilane.

These hydrophobic agents may be used alone or in combination of two or more kinds thereof.

Among these, from the viewpoint of obtaining a resin molded body having the suppression in the deterioration in a normal use environment, the hydrophobic agent includes, for example, preferably a silicon-containing organic compound, more preferably at least one selected from the group consisting of an alkoxysilane compound, a silazane compound, and an amino-based silane, still more preferably at least one selected from the group consisting of the alkoxysilane compound and the silazane compound, and particularly preferably the silazane compound.

From the viewpoint of obtaining a resin molded body that achieves both the suppression of deterioration in a normal use environment and the improvement of biodegradability in a degradation promoting environment, the hydrophobic agent is, for example, preferably a compound having 50 or less carbon atoms, more preferably a compound having 2 or more and 40 or less carbon atoms, and still more preferably a compound having 4 or more and 10 or less carbon atoms.

The hydrophobic treatment may be performed in a dry method or a wet method.

In a case where the hydrophobic treatment is performed in the wet method, for example, a dispersion liquid including a dispersion medium, a porous structure having a degradation promoter carried therein, and a hydrophobic agent is prepared, and stirred as necessary, and the dispersion medium is removed as necessary. This makes it possible to obtain a particle that has been subjected to a hydrophobic treatment.

In the preparation of the dispersion liquid, the hydrophobic agent may be added to the dispersion liquid before the removal of the dispersion medium in the step of carrying the degradation promoter in the porous structure. In addition, in the step of carrying the degradation promoter in the porous structure, another dispersion medium and a hydrophobic agent may be added to the particles after the removal of the dispersion medium.

In a case where at least one selected from the group consisting of an alkoxysilane compound and a silazane compound is used as the hydrophobic agent, preferred examples of the dispersion medium used for the hydrophobic treatment include an alcohol. Examples of the alcohol include methanol, ethanol, propanol, and butanol.

The concentration of the hydrophobic agent in the dispersion liquid is, for example, preferably 1% by mass or more and 50% by mass or less, more preferably 5% by mass or more and 40% by mass or less, and still more preferably 10% by mass or more and 30% by mass or less.

Examples of the temperature during the preparation and stirring of the dispersion liquid in the hydrophobic

treatment include a range of 10°C or higher and 40°C or lower, and the temperature may be 25°C.

The stirring time of the dispersion liquid in the hydrophobic treatment is, for example, in a range of 5 minutes or more and 120 minutes or less.

A method for removing the dispersion medium is not particularly limited and examples thereof include filtration.

<Alkylsilyl Group>

The present particle preferably has, for example, at least an alkylsilyl group on the surface of the particle. The present particle having an alkylsilyl group on the surface may also have the alkylsilyl group inside the pore.

In a case where the present particle has an alkylsilyl group on at least the surface of the particles, at least the surface of the particles is in a hydrophobized state, that is, hydrophobic. As a result, it is presumed that the degradation promoter is unlikely to come into contact with the biodegradable resin, and the deterioration of the resin molded body in a normal use environment is suppressed.

The alkylsilyl group may be a monoalkylsilyl group, a dialkylsilyl group, or a trialkylsilyl group. From the viewpoint of the hydrophobization, for example, the trialkylsilyl group is preferable as the alkylsilyl group.

The total number of carbon atoms in the alkyl group contained in the alkylsilyl group may be, for example, 1 or more and 10 or less, and from the viewpoint of the hydrophobization, the total number of carbon atoms is preferably 1 or more and 8 or less, and more preferably 2 or more and 6 or less.

The alkyl group contained in the alkylsilyl group may or may not have a substituent. Examples of the substituent contained in the alkyl group include an amino group and a phenyl group. From the viewpoint of easily controlling the degree of hydrophobicity, for example, the alkyl group preferably has no amino group, more preferably has no hydrophilic group such as an amino group, and is still more preferably not substituted.

The alkylsilyl group may or may not have a group other than the alkyl group bonded to the silicon atom. The group other than the alkyl group bonded to the silicon atom may be a hydrogen atom or another substituent. Examples of such another substituent include a vinyl group and a phenyl group. For example, the group other than the alkyl group bonded to the silicon atom preferably does not include an amino group, more preferably does not include a hydrophilic group such as an amino group, and is still more preferably a hydrogen atom.

The structure of the group on the surface of the present particle is confirmed by NMR or the like.

Examples of a method for obtaining a particle having an alkylsilyl group on a surface thereof include a method in which a hydrophobic treatment using a compound having an alkylsilyl group as the hydrophobic agent is performed.

Examples of the compound having an alkylsilyl group include methyltrimethoxysilane, ethyltrimethoxysilane, propyltrimethoxysilane, butyltrimethoxysilane, hexyltrimethoxysilane, n-octyltrimethoxysilane, decyltrimethoxysilane, dodecyltrimethoxysilane, methyltriethoxysilane, ethyltriethoxysilane, butyltriethoxysilane, hexyltriethoxysilane, decyltriethoxysilane, dodecyltriethoxysilane, benzyltriethoxysilane; dimethyldimethoxysilane, dimethyldiethoxysilane, methylvinyldimethoxysilane, methylvinyldiethoxysilane, trimethylmethoxysilane, trimethylethoxysilane, dimethyldisilazane, trimethyldisilazane, tetramethyldisilazane, pentamethyldisilazane, and hexamethyldisilazane.

[Resin Composition]

The resin composition according to the present exemplary embodiment includes a biodegradable resin and the above-described present particles, and the content of the degradation promoter with respect to 100 parts by mass of the biodegradable resin is 0.01 parts by mass or more and 10 parts by mass or less.

Hereinafter, the resin composition according to the present exemplary embodiment is also referred to as "the present composition". In addition, the content of the degradation promoter with respect to 100 parts by mass of the biodegradable resin is also referred to as "the amount of the promoter in the resin".

The present composition includes the above-described present particles and has the amount of the promoter in the resin in the range. Therefore, a resin molded body that is unlikely to deteriorate in a normal use environment and has good biodegradability in a degradation promoting environment can be obtained.

<Amount of Promoter in Resin>

The amount of the promoter in the resin, that is, the content of the degradation promoter with respect to 100 parts by mass of the biodegradable resin is 0.01 parts by mass or more and 10 parts by mass or less, and is, for example, preferably 0.01 parts by mass or more and 7 parts by mass or less, and more preferably 0.05 parts by mass or more and 7 parts by mass or less.

In a case where the amount of the promoter in the resin is equal to or more than the lower limit value, a resin molded body having excellent biodegradability in a degradation promoting environment can be obtained. In addition, in a case where the amount of the promoter in the resin is equal to or more than the lower limit value, a resin molded body having

a suppression of deterioration in a normal use environment can be obtained. On the other hand, in a case where the amount of the promoter in the resin is equal to or less than the upper limit value, a resin molded body having a suppression of deterioration in a normal use environment can be obtained. In addition, in a case where the amount of the promoter in the resin is equal to or less than the upper limit value, a resin molded body having excellent heat resistance can be obtained.

Furthermore, the content of the degradation promoter with respect to the entire resin composition may be 0.01% by mass or more and 9.1% by mass or less. From the viewpoint of obtaining a resin molded body that achieves both the suppression of deterioration in a normal use environment and the improvement of biodegradability in a degradation promoting environment, the content of the degradation promoter with respect to the entire resin composition is, for example, preferably 0.01% by mass or more and 6.5% by mass or less, and more preferably 0.05% by mass or more and 6.5% by mass or less.

<Biodegradable Resin>

The biodegradable resin is a resin that is degraded into water and carbon dioxide by a microorganism. In the present exemplary embodiment, the biodegradable resin means a resin having an aerobic-condition biodegradation ratio of 5% or more in 28 days according to a method in accordance with ISO 14855-1:2012.

Examples of the biodegradable resin include a polyester resin, a natural polymer, and a polyvinyl alcohol.

Examples of the polyester resin include an aliphatic polyester resin and an aliphatic aromatic polyester resin.

Examples of the aliphatic polyester resin include polyhydroxyalkanoic acids such as polylactic acid (PLA), polyglycolic acid (PGA), polyhydroxyalkanoate (PHA), polycaprolactone, polyalkylene succinate, and polyalkylene succinate/adipate. Examples of the polyhydroxyalkanoate (PHA) include poly(3-hydroxybutyrate-co-3-hydroxyhexanoate) (PHBH). Examples of the polyalkylene succinate include polyethylene succinate (PBA) and polybutylene succinate (PBS). Examples of the polyalkylene succinate/adipate include polyethylene succinate/adipate and polybutylene succinate/adipate (PBSA).

Examples of the aliphatic aromatic polyester resin include a polybutylene adipate/terephthalate copolymer resin (PBAT) and a polytetramethylene adipate/terephthalate copolymer resin.

Examples of the natural polymer include starch, cellulose, chitin, chitosan, gluten, gelatin, zein, soybean protein, collagen, and keratin.

Examples of the biodegradable resin also include cellulose derivatives (cellulose acylate, cellulose ether, hydroxyalkyl cellulose, and carboxymethyl cellulose).

Furthermore, examples of the cellulose acylate include cellulose acetate (cellulose monoacetate, cellulose diacetate (DAC), or cellulose triacetate), cellulose acetate propionate (CAP), and cellulose acetate butyrate (CAB).

Among these biodegradable resins, from the viewpoint of environmental suitability, examples of the biodegradable resin include at least one selected from the group consisting of polylactic acid, a polybutylene adipate/terephthalate copolymer resin, polyalkylene succinate, polyalkylene succinate adipate, and polyhydroxyalkanoate. In particular, for example, a resin (in particular, polylactic acid) corresponding to both a biomass resin and a biodegradable resin is preferable.

Each of these biodegradable resins may be used alone or in combination of two or more kinds thereof.

The content of the biodegradable resin is, for example, preferably 50% by mass or more and 99.9% by mass or less, and more preferably 90% by mass or more and 99.9% by mass or less with respect to the resin composition.

<Content of Particles>

The content of the present particles with respect to the biodegradable resin is, for example, preferably 0.1% by mass or more and 20% by mass or less, more preferably 1% by mass or more and 10% by mass or less, and still more preferably 1% by mass or more and 5% by mass or less.

In a case where the content of the present particles is within the range, it is more likely to obtain a resin molded body having sufficiently high biodegradability and heat resistance.

<Other Components>

The present composition may include other components.

Examples of the other components include a plasticizer, a flame retardant, a compatibilizer, a mold release agent, a light fastener, a weather resistant agent, a colorant, a pigment, a modifier, a drip inhibitor, an antistatic agent, a hydrolysis inhibitor, a filler, a reinforcing agent (glass fiber, carbon fiber, talc, clay, mica, glass flake, milled glass, glass beads, crystalline silica, alumina, silicon nitride, aluminum nitride, boron nitride, and the like), an acid acceptor (an oxide such as magnesium oxide or aluminum oxide; a metal hydroxide such as magnesium hydroxide, calcium hydroxide, aluminum hydroxide, and hydrotalcite; calcium carbonate; and talc), and a reactive trapping agent (for example, an epoxy

compound, an acid anhydride compound, and a carbodiimide).

The content of the other components is, for example, preferably 0% by mass or more and 5% by mass or less with respect to the entire resin composition. Here, "0% by mass" means that the other components are not included.

<Characteristics of Resin Composition>

- Biodegradation ratio -

The biodegradation ratio of the present composition measured by the method in accordance with ISO 14855-1: 2012 JIS 14855-1, for 28 days is, for example, preferably 30% or more, more preferably 50% or more, and still more preferably 70% or more. It should be noted that from the viewpoint of shape retention, the biodegradation ratio is, for example, 100% or less.

In a case where the biodegradation ratio is within the range, a resin molded body having sufficiently high biodegradability is likely to be obtained.

- Heat Deflection Temperature (HDT) -

A heat deflection temperature (HDT) of the present composition is, for example, preferably 125°C or higher, more preferably 140°C or higher, and still more preferably 150°C or higher. It should be noted that from the viewpoint of moldability, the heat deflection temperature (HDT) is, for example, 200°C or lower.

In a case where the heat deflection temperature (HDT) is within the range, a resin molded body having sufficiently high heat resistance can be obtained.

Here, the biodegradation ratio and the heat deflection temperature (HDT) are values measured by the methods described in "Examples" which will be described later.

<Method for Producing Resin Composition>

Examples of a method for producing the present composition include a method in which components are each mixed and melt-kneaded. A means for the melt-kneading is not particularly limited, and examples thereof include a twin-screw extruder, a Henschel mixer, a Banbury mixer, a single-screw extruder, a multi-screw extruder, and a kneader.

Then, by controlling the kneading conditions, a resin composition including the present particles and the biodegradable resin is obtained by kneading the present particles and the biodegradable resin.

<Resin Molded Body>

The resin molded body according to the present exemplary embodiment includes the present composition. That is, the resin molded body according to the present exemplary embodiment is configured to have the same composition as the present composition.

From the viewpoint of a high degree of freedom in shape, examples of the molding method for the resin molded body according to the present exemplary embodiment include injection molding. That is, examples of the resin molded body include an injection molded body obtained by injection molding.

The injection molding for the resin molded body according to the present exemplary embodiment may be performed using, for example, a commercially available device such as NEX500 manufactured by Nissei Plastic Industrial Co., Ltd., NEX150 manufactured by Nissei Plastic Industrial Co., Ltd., NEX7000 manufactured by Nissei Plastic Industrial Co., Ltd., PNX40 manufactured by Nissei Plastic Industrial Co., Ltd., and SE50D manufactured by Sumitomo Heavy Industries, Ltd.

The resin molded body according to the present exemplary embodiment may be a resin molded body obtained by another molding method. As another molding method, for example, extrusion molding, blow molding, thermal press molding, calendar molding, coating molding, cast molding, dipping molding, vacuum molding, transfer molding, or the like may be applied.

Examples of the application of the resin molded body according to the present exemplary embodiment include a housing for electronic or electrical apparatuses or home electric appliances; various parts for electronic or electrical apparatuses or home electric appliances; an interior part for an automobile; a block assembly toy; a plastic model kit; a storage case for a CD-ROM or a DVD; tableware; a beverage bottle; a food tray; a wrapping material; a film; and a sheet.

[Examples]

Hereinafter, Examples will be described below; however, the present invention is not limited to these Examples.

Furthermore, in the following description, all "parts" and "%" are in terms of mass unless otherwise specified. In addition, the following operations are performed at room temperature of 25°C and atmospheric pressure unless otherwise specified.

<Manufacture of Porous Structure>

(Materials Used)

- · Cellulose acetate (1): "Product name CA398-3" manufactured by Eastman Chemical Company, cellulose diacetate, number-average molecular weight Mn = 15,000, degree of substitution: 2.3
- · Cellulose nanofibers (2): "Product name BiNFIS Dry" manufactured by Sugino Machine Limited
- · Cellulose acetate (3): "Product name L50" manufactured by Daicel Corporation, cellulose diacetate, number-average molecular weight Mn = 50,000, degree of substitution: 2.2
- · Silica (4): Silica prepared by a sol-gel method

(Manufacture of Porous Structure 1)

A solution obtained by adding 10 parts by mass of the cellulose acetate (1) to 33 parts by mass of dimethyl sulfoxide is put into a container, and the solution is stirred at 90°C for 1 hour. The cellulose acetate (1) is dissolved in dimethyl sulfoxide, 7 parts by mass of water is slowly added while stirring the solution, and the solution is further stirred for 1 hour. Thereafter, the solution is rapidly cooled by dipping the container in ice water and subjected to phase separation to obtain a gel product of the porous structure. The generated gel is washed with 200 parts by mass of ethanol and dried to obtain a porous structure. Thereafter, the obtained porous structure is pulverized with a mill mixer and sieved with a 106 μm sieve to obtain a porous structure 1 which is a finely pulverized cellulose structure.

The specific surface area, the void ratio, the average diameter, and the specific gravity of the obtained porous structure 1 are measured by the above-described methods. The results are as follows.

Specific surface area: 70 $m^2/g$
Void ratio: 30%
Average diameter: 50 μm
Specific gravity: 0.8 $g/cm^3$

(Manufacture of Porous Structures 2 to 7)

A porous structure 2 is obtained in the same manner as the porous structure 1, except that the mesh diameter of the sieve is set to 38 μm.

A porous structure 3 is obtained in the same manner as the porous structure 1, except that the mesh diameter of the sieve is set to 1,000 μm.

A porous structure 4 is obtained in the same manner as the porous structure 1, except that the mesh diameter of the sieve is set to 1 μm.

A porous structure 5 is obtained in the same manner as the porous structure 1, except that the sieving after the pulverization is not carried out.

A porous structure 6 is obtained in the same manner as the porous structure 1, except that the amount of water is set to 8 parts by mass and the mesh diameter of the sieve is set to 1 μm.

A porous structure 7 is obtained in the same manner as the porous structure 1, except that the amount of water is set to 8 parts by mass and the sieving after the pulverization is not carried out.

The specific surface areas of the obtained porous structures 2 to 7 are measured by the above-described method, and are as follows.

Specific surface area: 70 $m^2/g$ 50 μm
Void ratio: 30%
Porous structure 2: 70 $m^2/g$
Porous structure 3: 70 $m^2/g$
Porous structure 4: 70 $m^2/g$
Porous structure 5: 70 $m^2/g$
Porous structure 6: 70 $m^2/g$

Porous structure 7: 30 $m^2$/g

The void ratios of the obtained porous structures 2 to 7 are measured by the above-described method, and are as follows.

Porous structure 2: 25%
Porous structure 3: 40%
Porous structure 4: 20%
Porous structure 5: 45%
Porous structure 6: 15%
Porous structure 7: 50%

The average diameters of the obtained porous structures 2 to 7 are measured by the above-described method, and are as follows.

Porous structure 2: 1 μm
Porous structure 3: 500 μm
Porous structure 4: 0.05 μm
Porous structure 5: 1,000 μm
Porous structure 6: 0.03 μm
Porous structure 7: 1,500 μm

The specific gravities of the obtained porous structures 2 to 7 are measured by the above-described method, and are as follows.

Porous structure 2: 0.8 g/$cm^3$
Porous structure 3: 0.8 g/$cm^3$
Porous structure 4: 0.8 g/$cm^3$
Porous structure 5: 0.8 g/$cm^3$
Porous structure 6: 0.9 g/$cm^3$
Porous structure 7: 0.9 g/$cm^3$

(Manufacture of Porous Structures 8 to 13)

A porous structure 8 is obtained in the same manner as the porous structure 1, except that the amount of water is set to 9 parts by mass.

A porous structure 9 is obtained in the same manner as the porous structure 1, except that the amount of water is set to 5 parts by mass.

A porous structure 10 is obtained in the same manner as the porous structure 1, except that the amount of water is set to 11 parts by mass.

A porous structure 11 is obtained in the same manner as the porous structure 1, except that the amount of water is changed to 4 parts by mass.

A porous structure 12 is obtained in the same manner as the porous structure 1, except that the amount of water is changed to 12 parts by mass.

A porous structure 13 is obtained in the same manner as the porous structure 1, except that the amount of water is set to 3 parts by mass.

The specific surface areas of the obtained porous structures 8 to 13 are measured by the above-described method, and are as follows.

Porous structure 8: 10 $m^2$/g
Porous structure 9: 120 $m^2$/g
Porous structure 10: 1 $m^2$/g
Porous structure 11: 150 $m^2$/g
Porous structure 12: 0.5 $m^2$/g
Porous structure 13: 180 $m^2$/g

The void ratios of the obtained porous structures 8 to 13 are measured by the above-described method, and are as follows.

Porous structure 8: 15%
Porous structure 9: 40%
Porous structure 10: 10%
Porous structure 11: 50%
Porous structure 12: 7%
Porous structure 13: 60%

The average diameters of the obtained porous structures 8 to 13 are measured by the above-described method, and are as follows.

Porous structure 8: 50 μm
Porous structure 9: 50 μm
Porous structure 10: 50 μm
Porous structure 11: 50 μm
Porous structure 12: 100 μm
Porous structure 13: 1 μm

The specific gravities of the obtained porous structures 8 to 13 are measured by the above-described method, and are as follows.

Porous structure 8: 1.0 g/cm$^3$
Porous structure 9: 0.6 g/cm$^3$
Porous structure 10: 1.1 g/cm$^3$
Porous structure 11: 0.5 g/cm$^3$
Porous structure 12: 1.2 g/cm$^3$
Porous structure 13: 0.4 g/cm$^3$

(Manufacture of Porous Structure 14)

A porous structure 14 is obtained in the same manner as the porous structure 1, except that 10 parts by mass of the cellulose acetate (1) is changed to 3 parts by mass of the cellulose nanofibers (2).
The specific surface area, the void ratio, the average diameter, and the specific gravity of the obtained porous structure 14 are measured by the above-described methods. The results are as follows.

Specific surface area: 70 m$^2$/g
Void ratio: 30%
Average diameter: 50 μm
Specific gravity: 0.8 g/cm$^3$

(Manufacture of Porous Structure 15)

A porous structure 15 is obtained in the same manner as the porous structure 1, except that 10 parts by mass of the cellulose acetate (1) is changed to 10 parts by mass of the cellulose acetate (3).
The specific surface area, the void ratio, the average diameter, and the specific gravity of the obtained porous structure 15 are measured by the above-described methods. The results are as follows.

Specific surface area: 70 m$^2$/g
Void ratio: 30%
Average diameter: 50 μm
Specific gravity: 0.8 g/cm$^3$

(Porous Structure 16)

As the porous structure 16, the silica (4) is used.
The specific surface area, the void ratio, the average diameter, and the specific gravity of the porous structure 16 are measured by the above-described methods. The results are as follows.

Specific surface area: 70 m$^2$/g

Void ratio: 30%
Average diameter: 50 μm
Specific gravity: 1.1 g/cm$^3$

<Manufacture of Particle>

(Particles A1 to A33)

The degradation promoters having the types and the addition amounts shown in Table 1, 20.9 parts by mass of pure water, 10 parts by mass of isopropanol, and 10 parts by mass of the porous structure having the number shown in Table 1 among the above-described porous structures are mixed. Then, the mixture is stirred at a stirring temperature of 25°C for a stirring time (1) shown in Table 1 to carry the degradation promoter in the pores. Thereafter, freeze-drying is carried out to obtain a porous structure having the degradation promoter carried therein.
10 parts by mass of the porous structure having the degradation promoter carried therein, a hydrophobic agent having the type and the addition amount shown in Table 1, and 135.5 parts by mass of isopropanol are mixed. Then, stirring is carried out at a stirring temperature of 25°C for a stirring time (2) shown in Table 1. Thereafter, isopropanol as a solvent is removed by filtration, and freeze-drying is performed. In this manner, particles A1 to A33 are obtained.
In the table, the symbols in the type of degradation promoter are as follows.

- · PPA: Phenylphosphonic acid (FUJIFILM Wako Pure Chemical Corporation, organic phosphorus compound, acid dissociation constant: 1.8)
- · Na2CO3: Sodium carbonate (manufactured by FUJIFILM Wako Pure Chemical Corporation, alkali metal carbonate)
- · SP: Serine protease (FUJIFILM Wako Pure Chemical Corporation, proteinase K, hydrolase)
- · H3PO3: Phosphoric acid (manufactured by FUJIFILM Wako Pure Chemical Corporation, inorganic acid, acid dissociation constant: 2.1)
- · TiO2: Titanium dioxide (manufactured by Ishihara Sangyo Kaisha, Ltd., product name: ST-01, photocatalyst)

In the table, the meanings of the symbols in the types of the hydrophobic agents are as follows.

- · HMDS: Hexamethyldisilazane (manufactured by Yuki Gosei Kogyo Co Ltd., silazane compound, number of carbon atoms: 6)

- · APTES: 3-Aminopropyltriethoxysilane (manufactured by Shin-Etsu Chemical Co., Ltd., amino-based silane, number of carbon atoms: 9)

In the table, "-" means that the corresponding component is not used. That is, it means that the hydrophobic treatment step is not performed.

[Table 1]

| Particle | Porous structure | Degradation promoter | | Stirring time (1) (minutes) | Hydrophobic agent | | Stirring time (2) (minutes) |
|---|---|---|---|---|---|---|---|
| | Number | Type | Addition amount (parts) | | Type | Addition amount (parts) | |
| A1 | 1 | PPA | 1 | 30 | HMDS | 36.4 | 30 |
| A2 | 2 | PPA | 1 | 30 | HMDS | 36.4 | 30 |
| A3 | 3 | PPA | 1 | 30 | HMDS | 36.4 | 30 |
| A4 | 4 | PPA | 1 | 30 | HMDS | 36.4 | 30 |
| A5 | 5 | PPA | 1 | 30 | HMDS | 36.4 | 30 |
| A6 | 6 | PPA | 1 | 30 | HMDS | 36.4 | 30 |
| A7 | 7 | PPA | 1 | 30 | HMDS | 36.4 | 30 |
| A8 | 8 | PPA | 1 | 30 | HMDS | 36.4 | 30 |
| A9 | 9 | PPA | 1 | 30 | HMDS | 36.4 | 30 |

(continued)

| Particle | Porous structure | Degradation promoter | | Stirring time (1) (minutes) | Hydrophobic agent | | Stirring time (2) (minutes) |
|---|---|---|---|---|---|---|---|
| | Number | Type | Addition amount (parts) | | Type | Addition amount (parts) | |
| A10 | 10 | PPA | 1 | 30 | HMDS | 36.4 | 30 |
| A11 | 11 | PPA | 1 | 30 | HMDS | 36.4 | 30 |
| A12 | 12 | PPA | 1 | 30 | HMDS | 36.4 | 30 |
| A13 | 13 | PPA | 1 | 30 | HMDS | 36.4 | 30 |
| A14 | 1 | PPA | 0.3 | 60 | HMDS | 36.4 | 30 |
| A15 | 1 | PPA | 10 | 30 | HMDS | 36.4 | 30 |
| A16 | 1 | PPA | 0.3 | 30 | HMDS | 36.4 | 30 |
| A17 | 1 | PPA | 10 | 60 | HMD S | 36.4 | 30 |
| A18 | 1 | PPA | 0.1 | 60 | HMDS | 36.4 | 30 |
| A19 | 1 | PPA | 20 | 60 | HMDS | 36.4 | 30 |
| A20 | 14 | PPA | 1 | 30 | HMDS | 36.4 | 30 |
| A21 | 15 | PPA | 1 | 30 | HMDS | 36.4 | 30 |
| A22 | 16 | PPA | 1 | 30 | HMDS | 36.4 | 30 |
| A23 | 1 | PPA | 1 | 30 | HMDS | 27.3 | 30 |
| A24 | 1 | PPA | 1 | 30 | HMDS | 45.6 | 30 |
| A25 | 1 | PPA | 1 | 30 | HMDS | 27.3 | 15 |
| A26 | 1 | PPA | 1 | 30 | HMDS | 45.6 | 60 |
| A27 | 1 | PPA | 1 | 30 | - | - | - |
| A28 | 1 | PPA | 1 | 30 | HMDS | 54.6 | 60 |
| A29 | 1 | Na2CO3 | 1 | 30 | HMDS | 36.4 | 30 |
| A30 | 1 | SP | 1 | 30 | HMDS | 36.4 | 30 |
| A31 | 1 | H3PO3 | 1 | 30 | HMDS | 36.4 | 30 |
| A32 | 1 | TiO2 | 1 | 30 | HMDS | 36.4 | 30 |
| A33 | 15 | PPA | 1 | 30 | APTES | 36.4 | 30 |

(Characteristics of Particle)

The following characteristics of the obtained particle are measured according to the above-described methods. The results are shown in Tables 2 and 3.

· Volume-average particle diameter of particles (denoted as "Particle diameter" in the table)
· BET specific surface area of particle (denoted as "BET" in the table)
· Amount of promoter carried (referred to as "Amount carried" in the table)
· Degree of Hydrophobicity
· Alkylsilyl group (denoted as "Group" in the table) present on particle surface In the table, "-" means that no alkylsilyl group is confirmed on the particle surface.

<Manufacture of Resin Composition (Examples and Comparative Examples)>

Among the above-described particles, particles having the numbers and the addition amounts shown in Tables 2 and 3, and 100 parts by mass of the biodegradable resin having the resin types shown in Tables 2 and 3 are put into a twin-screw extruder (manufactured by Toshiba Machine Co., Ltd., TEX-41SS) from a hopper. The particles and the biodegradable resin are kneaded, and the jetted strands are cooled with a quench pool and pelletized with a pelletizer to obtain a resin composition pellet.

Furthermore, the cylinder temperature and the kneading torque during kneading are set as follows according to the type of biodegradable resin used.

PLA: Cylinder temperature of 180°C, kneading torque of 2,800 N·m
PBAT: Cylinder temperature of 170°C, kneading torque of 2,000 N·m
PBS: Cylinder temperature of 170°C, kneading torque of 1,500 N·m
PHBH: Cylinder temperature of 160°C, kneading torque of 2,000 N·m

The amount of the promoter in the resin in the obtained resin composition is shown in Tables 2 and 3 (in the tables, "Amount in resin").

<Evaluation>

(Manufacture of Resin Molded Body)

The resin pellets of each example are dried at 70°C for 4 hours and charged into an injection molding device (manufactured by Nissei Plastic Industrial Co., Ltd., NEX500). Then, an ISO527 recommended dumbbell test piece (test part, width: 8 mm × thickness: 4 mm × length: 110 mm) is molded to obtain a resin molded body. As necessary, the dumbbell test piece is annealed and crystallized.

Furthermore, the cylinder temperature, the mold temperature, and the retention time in the mold during molding are set as follows according to the type of the biodegradable resin used.

PLA: Cylinder temperature of 180°C, mold temperature of 40°C, retention time in mold of 2 minutes
PBAT: Cylinder temperature of 170°C, mold temperature of 30°C, retention time in mold of 2 minutes
PBS: Cylinder temperature of 170°C, mold temperature of 30°C, retention time in mold of 4 minutes
PHBH: Cylinder temperature of 160°C, mold temperature of 30°C, retention time in mold of 6 minutes

(Biodegradation Ratio)

The obtained resin molded body is pulverized with Lab Mill (manufactured by Dalton Corporation, LM-05) and then sieved with a 100 μm mesh to recover the passing fraction. For the recovered product, an aerobic biodegradation measurement is carried out by a method in accordance with ISO 14855-1:2012, and the biodegradation ratio after 28 days is determined. The higher the biodegradation ratio, the better the biodegradability of the resin molded body in a degradation promoting environment. The results are shown in Tables 2 and 3.

(Storage Retention Rate)

The obtained resin molded body is stored in a constant-temperature and constant-humidity tank (THN042PA, manufactured by Advantec Toyo Kaisha, Ltd.) at a temperature of 55°C and a humidity of 90% for 14 days.

The heat deflection temperature (HDT) and the number-average molecular weight, which will be described later, are measured for each of the resin molded body before storage and the resin molded body after storage.

The heat deflection temperature (HDT) of the resin molded body before storage is defined as HDT1, the heat deflection temperature (HDT) of the resin molded body after storage is defined as HDT2, and the value of (HDT2/HDT1) × 100 is defined as a storage retention rate HDT (%).

The number-average molecular weight of the resin molded body before storage is defined as Mn1, the number-average molecular weight of the resin molded body after storage is defined as Mn2, and the value of (Mn2/Mn1) × 100 is defined as a storage retention rate Mn (%).

It means that the higher the storage retention rate, the less likely the resin molded body deteriorates in a normal use environment. The results are shown in Tables 2 and 3.

(Heat Deflection Temperature (HDT))

For the obtained resin molded body, a heat deflection temperature (HDT) at a load of 0.45 MPa is measured in accordance with ISO 75-1:2020, using an HDT measuring device (HDT-3, manufactured by Toyo Seiki Seisaku-sho, Ltd.). The higher the heat deflection temperature (HDT), the more excellent the heat resistance of the resin molded body in a normal use environment. The results from the measurement of the heat deflection temperature (HDT) for the resin molded

body before storage are shown in Tables 2 and 3 (in the tables, "HDT").

(Measurement of Number-Average Molecular Weight)

20 mg of the resin molded body is dissolved in 5 ml of chloroform, filtered, and then subjected to gel filtration chromatography (HLC-8220GPC, manufactured by Tosoh Corporation) to measure the number-average molecular weight.

In the table, the meanings of the symbols in the types of the biodegradable resin ("Resin type" in the table) are as follows.

- · PLA: Polylactic acid (Ingeo 3001D, manufactured by NatureWorks LLC)
- · PBAT: Polybutylene adipate/terephthalate copolymer resin (manufactured by BASF SE)
- · PBS: Polybutylene succinate (Bio-PBS manufactured by PTT MCC Biochem Co., Ltd.)
- · PHBH: Poly(3-hydroxybutyrate-co-3-hydroxyhexanoate) (manufactured by Kaneka Corporation)

[Table 2]

| | Particle | | | | | | | Resin composition | | Evaluation | | | |
|---|---|---|---|---|---|---|---|---|---|---|---|---|---|
| | Number | Addition amount (parts) | Particle diameter (μm) | BET ($m^2$ | Amount carried (parts) | Degree of hydrophobicity (%) | Group | Resin type | Amount in resin (parts) | Biodegradation ratio (%) | Storage retention rate HDT (%) | Storage retention rate Mn (%) | HDT (°C) |
| Example A1 | A1 | 1 | 50 | 70 | 10 | 10 | Trimethylsilyl | PLA | 0.1 | 72 | 80 | 75 | 150 |
| Example A2 | A2 | 1 | 1 | 70 | 10 | 10 | Trimethylsilyl | PLA | 0.1 | 72 | 70 | 65 | 140 |
| Example A3 | A3 | 1 | 500 | 70 | 10 | 10 | Trimethylsilyl | PLA | 0.1 | 55 | 80 | 75 | 150 |
| Example A4 | A4 | 1 | 0.05 | 70 | 10 | 10 | Trimethylsilyl | PLA | 0.1 | 72 | 60 | 55 | 130 |
| Example A5 | A5 | 1 | 1000 | 70 | 10 | 10 | Trimethylsilyl | PLA | 0.1 | 50 | 80 | 75 | 150 |
| Comparative Example A1 | A6 | 1 | 0.03 | 70 | 10 | 10 | Trimethylsilyl | PLA | 0.1 | 72 | 20 | 15 | 120 |
| Comparative Example A2 | A7 | 1 | 1500 | 30 | 10 | 10 | Trimethylsilyl | PLA | 0.1 | 25 | 80 | 75 | 150 |
| Example A6 | A8 | 1 | 50 | 10 | 10 | 10 | Trimethylsilyl | PLA | 0.1 | 72 | 70 | 65 | 140 |
| Example A7 | A9 | 1 | 50 | 120 | 10 | 10 | Trimethylsilyl | PLA | 0.1 | 72 | 70 | 65 | 150 |
| Example A8 | A10 | 1 | 50 | 1 | 10 | 10 | Trimethylsilyl | PLA | 0.1 | 72 | 60 | 55 | 130 |
| Example A9 | A11 | 1 | 50 | 150 | 10 | 10 | Trimethylsilyl | PLA | 0.1 | 72 | 60 | 55 | 130 |
| Comparative Example A3 | A12 | 1 | 100 | 0.5 | 10 | 10 | Trimethylsilyl | PLA | 0.1 | 72 | 20 | 15 | 120 |
| Comparative Example A4 | A13 | 1 | 1 | 180 | 10 | 10 | Trimethylsilyl | PLA | 0.1 | 72 | 20 | 15 | 120 |
| Example A10 | A14 | 2 | 50 | 70 | 5 | 10 | Trimethylsilyl | PLA | 0.1 | 65 | 80 | 75 | 150 |
| Example A11 | A15 | 0.33 | 50 | 70 | 30 | 10 | Trimethylsilyl | PLA | 0.1 | 72 | 60 | 55 | 140 |
| Example A12 | A16 | 10 | 50 | 70 | 1 | 10 | Trimethylsilyl | PLA | 0.1 | 50 | 80 | 75 | 150 |
| Example A13 | A17 | 0.2 | 50 | 70 | 50 | 10 | Trimethylsilyl | PLA | 0.1 | 75 | 40 | 35 | 130 |
| Comparative Example A5 | A18 | 14.3 | 50 | 70 | 0.7 | 10 | Trimethylsilyl | PLA | 0.1 | 20 | 80 | 75 | 150 |

(continued)

| | Particle | | | | | | | Resin composition | | Evaluation | | | |
|---|---|---|---|---|---|---|---|---|---|---|---|---|---|
| | Number | Addition amount (parts) | Particle diameter (μm) | BET ($m^2$ | Amount carried (parts) | Degree of hydrophobicity (%) | Group | Resin type | Amount in resin (parts) | Biodegradation ratio (%) | Storage retention rate HDT (%) | Storage retention rate Mn (%) | HDT (°C) |
| Comparative Example A6 | A19 | 0.18 | 50 | 70 | 55 | 10 | Trimethylsilyl | PLA | 0.1 | 75 | 20 | 15 | 120 |
| Example A14 | A20 | 1 | 50 | 70 | 10 | 10 | Trimethylsilyl | PLA | 0.1 | 72 | 80 | 75 | 150 |
| Example A15 | A21 | 1 | 50 | 70 | 10 | 10 | Trimethylsilyl | PLA | 0.1 | 65 | 85 | 75 | 150 |
| Comparative Example A7 | A22 | 1 | 50 | 70 | 10 | 10 | Trimethylsilyl | PLA | 0.1 | 25 | 90 | 85 | 105 |

[Table 3]

| | Particle | | | | | | | Resin composition | | Evaluation | | | |
|---|---|---|---|---|---|---|---|---|---|---|---|---|---|
| | Number | Addition amount (parts) | Particle diameter (μm) | BET ($m^2/g$) | Amount carried (parts) | Degree of hydrophobicity (%) | Group | Resin type | Amount in resin (parts) | Biodegradation ratio (%) | Storage retention rate HDT (%) | Storage retention rate Mn (%) | HDT (°C) |
| Example A16 | A23 | 1 | 50 | 70 | 10 | 1 | Trimethylsilyl | PLA | 0.1 | 70 | 60 | 55 | 140 |
| Example A17 | A24 | 1 | 50 | 70 | 10 | 20 | Trimethylsilyl | PLA | 0.1 | 50 | 85 | 80 | 150 |
| Example A18 | A25 | 1 | 50 | 70 | 10 | 0.1 | Trimethylsilyl | PLA | 0.1 | 75 | 40 | 35 | 130 |
| Example A19 | A26 | 1 | 50 | 70 | 10 | 30 | Trimethylsilyl | PLA | 0.1 | 40 | 90 | 85 | 150 |
| Comparative Example A8 | A27 | 1 | 50 | 70 | 10 | 0 | - | PLA | 0.1 | 75 | 20 | 15 | 120 |
| Comparative Example A9 | A28 | 1 | 50 | 70 | 10 | 50 | Trimethylsilyl | PLA | 0.1 | 25 | 95 | 90 | 150 |
| Example A20 | A29 | 1 | 50 | 70 | 10 | 10 | Trimethylsilyl | PLA | 0.1 | 45 | 80 | 75 | 150 |
| Example A21 | A30 | 1 | 50 | 70 | 10 | 10 | Trimethylsilyl | PLA | 0.1 | 70 | 70 | 65 | 150 |
| Example A22 | A31 | 1 | 50 | 70 | 10 | 10 | Trimethylsilyl | PLA | 0.1 | 72 | 75 | 70 | 150 |
| Example A23 | A32 | 1 | 50 | 70 | 10 | 10 | Trimethylsilyl | PLA | 0.1 | 45 | 80 | 75 | 150 |
| Example A24 | A33 | 1 | 50 | 70 | 10 | 0.1 | Aminopropyl | PLA | 0.1 | 72 | 40 | 35 | 120 |
| Example A25 | A15 | 0.033 | 50 | 70 | 30 | 10 | Trimethylsilyl | PLA | 0.01 | 40 | 45 | 40 | 140 |
| Example A26 | A15 | 33.3 | 50 | 70 | 30 | 10 | Trimethylsilyl | PLA | 10 | 72 | 45 | 40 | 120 |
| Example A27 | A15 | 0.03 | 50 | 70 | 30 | 10 | Trimethylsilyl | PLA | 0.009 | 25 | 15 | 10 | 140 |
| Example A28 | A15 | 36.7 | 50 | 70 | 30 | 10 | Trimethylsilyl | PLA | 11 | 80 | 15 | 10 | 110 |
| Example A29 | A1 | 1 | 50 | 70 | 10 | 10 | Trimethylsilyl | PBAT | 0.1 | 60 | 80 | 75 | 130 |
| Example A30 | A1 | 1 | 50 | 70 | 10 | 10 | Trimethylsilyl | PBS | 0.1 | 50 | 80 | 75 | 130 |
| Example A31 | A1 | 1 | 50 | 70 | 10 | 10 | Trimethylsilyl | PHBH | 0.1 | 75 | 80 | 75 | 130 |
| Comparative Example A10 | A22 | 1 | 50 | 70 | 10 | 10 | Trimethylsilyl | PHBH | 0.1 | 25 | 90 | 85 | 105 |

From the results, it is found that in the present Examples, a resin molded body having a high storage retention rate and good biodegradability is obtained, as compared with Comparative Examples. That is, in the present Examples, it can be seen that a resin molded body which is unlikely to deteriorate in a normal use environment and has good biodegradability in a degradation promoting environment can be obtained, as compared with Comparative Examples.

(Supplementary Notes)

The present exemplary embodiment includes the following aspects.

(((1))) A particle comprising:

a porous structure including at least one of a cellulose or a cellulose derivative as a main component; and
a degradation promoter carried in the porous structure,
wherein a volume-average particle diameter of the particles is 0.05 μm or more and 1,000 μm or less,
a BET specific surface area of the particle is 1 $m^2/g$ or more and 150 $m^2/g$ or less,
a degree of hydrophobicity of the particle is 0.1% or more and 30% or less, and
a content of the degradation promoter with respect to 100 parts by mass of the porous structure is 1 part by mass or more and 50 parts by mass or less.

(((2))) The particle according to (((1))),
wherein the degradation promoter includes at least one selected from the group consisting of an acid, a base, and an enzyme.
(((3))) The particle according to (((1))) or (((2))),
wherein the particle has at least an alkylsilyl group on a surface of the particle.
(((4))) A resin composition comprising:

a biodegradable resin; and
the particle according to any one of (((1))) to (((3))),
wherein a content of the degradation promoter with respect to 100 parts by mass of the biodegradable resin is 0.01 parts by mass or more and 10 parts by mass or less.

(((5))) The resin composition according to (((4))),
wherein the biodegradable resin is at least one selected from the group consisting of polylactic acid, a polybutylene adipate/terephthalate copolymer resin, polyalkylene succinate, polyalkylene succinate adipate, and polyhydroxyalkanoate.
(((6))) The resin composition according to (((4))) or (((5))),
wherein a biodegradation ratio measured by a method in accordance with ISO 14855-1: 2012 is 30% or more in 28 days.
(((7))) The resin composition according to any one of (((4))) to (((6))),
wherein a heat deflection temperature (HDT) is 125°C or higher.

According to (((1))), there is provided a particle including a porous structure including at least one of a cellulose or a cellulose derivative as a main component, in which the particle makes it possible to obtain a resin molded body that is unlikely to deteriorate in a normal use environment and has good biodegradability in a degradation promoting environment, as compared with a case where a degradation promoter is not included, a case where a volume-average particle diameter of the particles is less than 0.05 μm or more than 1,000 μm, a case where a BET specific surface area of the particle is less than 1 $m^2/g$ or more than 150 $m^2/g$, a case where a degree of hydrophobicity of the particle is less than 0.1% or more than 30%, or a case where a content of the degradation promoter with respect to 100 parts by mass of the porous structure is less than 1 part by mass or more than 50 parts by mass.
According to (((2))), there is provided the particle, which makes it possible to obtain a resin molded body having good biodegradability in a degradation promoting environment, as compared with a case where the degradation promoter is a titanium oxide particle.
According to (((3))), there is provided the particle, which makes it possible to obtain a resin molded body that is unlikely to deteriorate in a normal use environment, as compared to a case where the particle does not have an alkylsilyl group on the surface.
According to (((4))) or (((5))), there is provided a resin composition including a biodegradable resin, and a particle including a porous structure including at least one of a cellulose or a cellulose derivative as a main component, in which the resin composition makes it possible to obtain a resin molded body that is unlikely to deteriorate in a normal use

environment and has good biodegradability in a degradation promoting environment, as compared with a case where a particle not including a degradation promoter is applied, a case where a particle having a volume-average particle diameter of the particles of less than 0.05 μm or more than 1,000 μm is applied, a case where a particle having a BET specific surface area of the particle of less than 1 $m^2/g$ or more than 150 $m^2/g$ is applied, a case where a particle having a degree of hydrophobicity of less than 0.1% or more than 30% is applied, a case where a particle having a content of the degradation promoter with respect to 100 parts by mass of the porous structure of less than 1 part by mass or more than 50 parts by mass is applied, or a case where a content of the degradation promoter with respect to 100 parts by mass of the biodegradable resin is less than 0.01 parts by mass or more than 10 parts by mass.

According to (((6))), there is provided the resin composition, which makes it possible to obtain a resin molded body having good biodegradability in a degradation promoting environment, as compared with a case where the biodegradation ratio is less than 30% in 28 days.

According to (((7))), there is provided the resin composition, which makes it possible to obtain a resin molded body having excellent heat resistance, as compared to a case where the heat deflection temperature (HDT) is lower than 125°C.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

**1.** A particle comprising:

a porous structure including at least one of a cellulose or a cellulose derivative as a main component; and
a degradation promoter carried in the porous structure,
wherein a volume-average particle diameter of particles is 0.05 μm or more and 1,000 μm or less,
a BET specific surface area of the particle is 1 $m^2/g$ or more and 150 $m^2/g$ or less,
a degree of hydrophobicity of the particle is 0.1% or more and 30% or less, and
a content of the degradation promoter with respect to 100 parts by mass of the porous structure is 1 part by mass or more and 50 parts by mass or less.

**2.** The particle according to claim 1,
wherein the degradation promoter includes at least one selected from the group consisting of an acid, a base, and an enzyme.

**3.** The particle according to claim 1 or 2,
wherein the particle has at least an alkylsilyl group on a surface of the particle.

**4.** A resin composition comprising:

a biodegradable resin; and
the particle according to any one of claims 1 to 3,

wherein a content of the degradation promoter with respect to 100 parts by mass of the biodegradable resin is 0.01 parts by mass or more and 10 parts by mass or less.

**5.** The resin composition according to claim 4,
wherein the biodegradable resin is at least one selected from the group consisting of polylactic acid, a polybutylene adipate/terephthalate copolymer resin, polyalkylene succinate, polyalkylene succinate adipate, and polyhydroxyalkanoate.

**6.** The resin composition according to claim 4 or 5,
wherein a biodegradation ratio measured by a method in accordance with ISO 14855-1: 2012 is 30% or more in 28 days.

7. The resin composition according to any one of claims 4 to 6, wherein a heat deflection temperature is 125°C or higher.

Europäisches Patentamt
European Patent Office
Office européen des brevets

# EUROPEAN SEARCH REPORT

Application Number
EP 25 17 5632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/407084 A1 (YAO KENJI [JP] ET AL) 21 December 2023 (2023-12-21) * paragraph [0016]; claims; tables * ----- | 1-7 | INV. C08J9/00 C08L1/08 C08L67/04 |
| A | EP 4 438 660 A1 (FUJIFILM BUSINESS INNOVATION CORP [JP]) 2 October 2024 (2024-10-02) * paragraph [0089]; claims * ----- | 1-7 | |
| A | EP 4 477 703 A1 (FUJIFILM BUSINESS INNOVATION CORP [JP]) 18 December 2024 (2024-12-18) * claims; examples; tables 1-1, 1-2 * ----- | 1-7 | |

TECHNICAL FIELDS SEARCHED (IPC)

C08J

The present search report has been drawn up for all claims

| Place of search | Date of completion of the search | Examiner |
|---|---|---|
| Munich | 24 October 2025 | Frison, Céline |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 17 5632

This annex lists the patent family members relating to the patent documents cited in the above-mentioned European search report. The members are as contained in the European Patent Office EDP file on
The European Patent Office is in no way liable for these particulars which are merely given for the purpose of information.

24-10-2025

| Patent document cited in search report | Publication date | Patent family member(s) | Publication date |
|---|---|---|---|
| US 2023407084 A1 | 21-12-2023 | CN 117264388 A | 22-12-2023 |
| | | JP 2024000871 A | 09-01-2024 |
| | | US 2023407084 A1 | 21-12-2023 |
| EP 4438660 A1 | 02-10-2024 | EP 4438660 A1 | 02-10-2024 |
| | | JP 2024142153 A | 10-10-2024 |
| | | US 2024327617 A1 | 03-10-2024 |
| EP 4477703 A1 | 18-12-2024 | CN 119119590 A | 13-12-2024 |
| | | EP 4477703 A1 | 18-12-2024 |
| | | US 2024417548 A1 | 19-12-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009057408 A
- JP 2022171207 A
- WO 2023100258 A